# EUROPÄISCHE PATENTSCHRIFT

(11) **EP 3 010 734 B1**
(45) Veröffentlichungstag und Bekanntmachung des Hinweises auf die Patenterteilung: **19.12.2018**
(21) Anmeldenummer: 14729230.4
(22) Anmeldetag: 19.05.2014
(51) Int. Cl.: B60G 3/20, B60G 3/22, B60G 7/00, B62D 7/14, B60G 3/28

(54) **LENKBARE RADAUFHÄNGUNG**
STEERABLE SUSPENSION
SUSPENSION ORIENTABLE

(30) Priorität: 19.06.2013 DE 102013211535
(43) Veröffentlichungstag der Anmeldung: 27.04.2016
(73) Patentinhaber: ZF Friedrichshafen AG, 88046 Friedrichshafen (DE)
(72) Erfinder: WALLGREN, Klaus, 85757 Karlsfeld (DE)
(86) Internationale Anmeldenummer: PCT/EP2014/060181
(87) Internationale Veröffentlichungsnummer: WO 2014/202300

(56) Entgegenhaltungen:
- EP-A1- 0 278 095
- EP-A2- 0 873 891
- WO-A1-2008/061618
- WO-A1-2013/075787
- DE-A1- 3 729 767
- DE-A1-102005 049 947
- DE-A1-102006 029 136
- DE-A1-102006 055 295
- DE-C1- 3 714 034
- DE-T2- 3 875 336
- DE-T2- 69 412 909
- DE-T2- 69 735 117
- JP-A- H0 747 824
- JP-A- H04 372 408
- JP-A- 2000 025 434

## Beschreibung

Die vorliegende Erfindung betrifft eine Radaufhängung für ein Kraftfahrzeug gemäß der im Oberbegriff des Patentanspruchs 1 näher definierten Art. Eine solche Radaufhängung ist aus der DE 10 2010 012 014 A1 bekannt.

Aus der EP 0 278 095 A1 ist eine Radaufhängung für lenkbare Räder von Kraftfahrzeugen bekannt, die einen das Rad lagernden Radträger umfasst. Von den radführenden Lenkern der Radaufhängung ist einer dieser etwa in Querrichtung des Fahrzeugs über einen Stellmotor verlagerbar und stützt ferner die Tragfeder ab. Mit seinem inneren Ende ist der Lenker an einem Zwischenhebel angelenkt. Dieser Zwischenhebel ist um eine etwa in Fahrzeuglängsrichtung verlaufende Schwenkachse am Fahrzeugaufbau schwenkbar gelagert und an seinem unteren Ende über seitliche Spurstangen mit dem Stellmotor verbunden.

Es ist eine Aufgabe der Erfindung, eine Radaufhängung so auszugestalten, dass für die Radaufhängung ein insgesamt geringerer Bauraum benötigt wird.

Die der Erfindung zugrunde liegende Aufgabe wird durch die Merkmale des Patentanspruchs 1 gelöst. Weitere vorteilhafte Ausgestaltungen ergeben sich aus den Unteransprüchen und den Zeichnungen.

Es wird eine Radaufhängung, insbesondere eine Hinterradaufhängung, für ein Kraftfahrzeug vorgeschlagen, die einen Radträger zum Aufnehmen eines Rades, einen radführenden Lenker zum gelenkigen Verbinden des Radträgers mit einem dafür vorgesehenen Aufbau und ein Lenkmittel zum Lenken des Rades umfasst. Der radführende Lenker kann unmittelbar mit dem Aufbau gelenkig verbunden sein. Alternativ kann dieser aber auch gelenkig an einem Hilfsrahmen montiert sein, der wiederum mit dem Aufbau verbunden ist. Unter Lenkmittel ist jegliche Vorrichtung zu verstehen, die dazu geeignet ist, das Rad entweder passiv nach Art eines Spurlenkers mittels des Radhubs beim Ein- oder Ausfedern oder aktiv über einen Stellmotor um einen bestimmten Lenkwinkel zu verdrehen. Im eingelenkten Zustand weisen die Räder gegenüber der Fahrzeuglängsachse eine positive oder negative Schrägstellung um eine radseitige Lenkachse auf, die in etwa in Fahrzeughochrichtung verläuft.

Um die Radaufhängung lenkbar auszubilden, sind der Radträger und der radführende Lenker derart gelenkig miteinander verbunden, dass der Radträger gegenüber dem radführenden, insbesondere spurführenden, Lenker um die Lenkachse schwenkbar ist. Die Lenkachse ist vorzugsweise im Wesentlichen in Fahrzeughochrichtung ausgerichtet. Der Radträger ist mit dem Lenker in einem, insbesondere ersten Verbindungsbereich mittelbar über einen Integrallenker verbunden. Hierdurch kann vorteilhafterweise eine sehr kompakte lenkbare Radaufhängung geschaffen werden. Der hierdurch gewonnene Bauraum kann somit genutzt werden, um die Radaufhängung zusätzlich antreibbar auszubilden. Hierfür kann das im Radträger drehbar aufgenommene Rad mit einer Antriebseinheit, insbesondere einem Radnabenmotor, gekoppelt sein. Alternativ kann das anzutreibende Rad aber auch über eine Antriebswelle mittelbar mit dem Antriebsaggregat verbunden sein. Das Antriebsaggregat kann ein Verbrennungsmotor oder ein Elektromotor sein. Durch die mittelbare Kopplung des Radträgers mit dem radführenden Lenker über den Integrallenker kann die Radaufhängung ferner sehr kostengünstig ausgebildet werden.

Vorteilhaft ist es, wenn der Radträger mit dem Lenker in einem zweiten Verbindungsbereich unmittelbar, insbesondere über ein Kugelgelenk, verbunden ist. Im zweiten Verbindungsbereich ist der Radträger somit mit dem radführenden Lenker derart verbunden, dass er ohne zusätzliche Lenkerabstützung im Wesentlichen frei schwenken bzw. rotieren könnte. Der davon beabstandet im ersten Verbindungsbereich angeordnete Integrallenker verhindert jedoch eine Rotation des Radträgers über die Radachse. Durch die über den Integrallenker ausgebildete mittelbare Gelenkverbindung im ersten Verbindungsbereich und die über das Kugelgelenk ausgebildete unmittelbare Gelenkverbindung im davon beabstandeten zweiten Verbindungsbereich ist der Radträger derart gelenkig mit dem radführenden, insbesondere vorspurführenden, Lenker verbunden, dass dieser zum einen gegenüber dem dafür vorgesehenen Aufbau und/oder Hilfsrahmen gelenkig Ein- und Ausfedern kann und zum anderen zum Ausführen einer Lenkbewegung gegenüber dem radführenden Lenker bzw. gegenüber dem Aufbau um die Lenkachse rotiert werden kann.

Um eine Rotation des Radträgers über die Radachse zu vermeiden ist es ferner vorteilhaft, wenn die beiden Verbindungsbereiche voneinander, insbesondere in Fahrzuglängsrichtung, beabstandet sind. Hierdurch wirkt der im ersten Verbindungsbereich angeordnete Integrallenker als Stützelement, so dass eine Rotation des Radträgers um die Radachse vermieden wird.

Ferner ist es vorteilhaft, wenn einer der beiden Verbindungsbereiche, insbesondere der erste Verbindungsbereich, hinter der Radmitte und der andere vor der Radmitte ausgebildet ist. Hierdurch kann ein ausreichend großer Abstand zwischen dem ersten und zweiten Verbindungsbereich realisiert werden, so dass die auf den Integrallenker einwirkenden Stützkräfte reduziert werden können.

Die Radaufhängung kann sehr kompakt ausgebildet werden, wenn der Integrallenker im ungelenkten Zustand des Rades im Wesentlichen in Fahrzeughochrichtung oder zumindest annähernd parallel zur Fahrzeughochachse ausgerichtet ist. Des Weiteren kann hierdurch der maximale positive bzw. negative Lenkwinkel annähernd gleich groß ausgebildet werden.

Erfindungsgemäß ist der Integrallenker, insbesondere im Bereich eines seiner beiden Enden, mit dem Radträger und, insbesondere im Bereich seines anderen Endes, mit dem radführenden Lenker jeweils über ein Drehgelenk verbunden. Die Drehachsen der beiden Drehgelenke sind zueinander parallel und im Wesentlichen in Fahrzeuglängsrichtung ausgerichtet. Hierdurch kann die Radaufhängung sehr kompakt und bauraumsparend ausgebildet werden. Des Weiteren kann das Lenkmittel konstruktiv einfach ausgebildet werden, da dieses zum Auslenken des Integrallenkers lediglich in Fahrzeugquerrichtung verschiebbar ausgebildet sein muss. Hierdurch können die Herstellungskosten der Radaufhängung reduziert werden.

Erfindungsgemäß ist der radführende Lenker zumindest teilweise als Querlenker und Längslenker ausgebildet. So weist der radführende Lenker einen sich im Wesentlichen in Fahrzeugquerrichtung erstreckenden und in Fahrzeuglängsrichtung hinter, in oder vor der Radmitte liegenden Querlenkerbereich auf. Wenn der Querlenkerbereich vorzugsweise in Fahrzeuglängsrichtung hinter der Radmitte angeordnet ist, kann im Bereich der Radmitte, insbesondere bei Allradfahrzeugen, genügend freier Bauraum für die Antriebsmittel, insbesondere Motoren und/oder Getriebe, geschaffen werden. Eine in und/oder nahe der Radmitte, insbesondere in Fahrtrichtung, angeordneter Querlenkerbereich hat den Vorteil, dass durch Radquerkräfte verursachte Negativeinflüsse vermieden werden können, wie z.B. Querkräfte und Momente an der Verbindung des Längslenkers zur Karosserie bzw. zum Aufbau. Mittels des Querlenkerbereiches kann eine ausreichend hohe Sturzsteifigkeit sichergestellt werden, insbesondere wenn dieser nahe der Radmitte angeordnet ist. Zusätzlich weist der Lenker einen sich im Wesentlichen in Fahrzeuglängsrichtung erstreckenden Längslenkerbereich auf. Vorzugsweise erstreckt sich dieser in Fahrzeuglängsrichtung vom Querlenkerbereich ausgehend bis vor die Radmitte. Das freie Ende des Längslenkerbereiches - d.h. dasjenige Ende, das dafür vorgesehen ist, um am Aufbau gelenkig befestigt zu werden - liegt somit in Fahrzeuglängsrichtung gesehen vor der Radmitte. Mittels des Längslenkerbereiches können vorteilhafterweise auftretende Brems- und Beschleunigungsmomente abgestützt werden.

Eine gute Kraftverteilung kann sichergestellt werden, wenn der Lenker im Wesentlichen L-förmig ausgebildet ist, da hierdurch, insbesondere durch den Längslenkerbereich, Radlängskräfte gut abgestützt werden können. Erfindungsgemäß bildet hierbei der Querlenkerbereich den kurzen und der Längslenkerbereich den langen Schenkel der L-Form. Vorzugsweise ist der L-förmige Lenker gegenüber dem Radträger derart angeordnet, dass sein Längslenkerbereich vom Querlenkerbereich, insbesondere von dessen Ende, ausgehend im Wesentlichen in Fahrtrichtung zeigt.

Vorteilhafterweise ist der erste Verbindungsbereich im Bereich des radträgerseitigen Endes des Querlenkerbereiches ausgebildet. Zusätzlich oder alternativ ist der zweite Verbindungsbereich im Bereich des Längslenkerbereiches ausgebildet. Hierdurch kann die Lage und Orientierung der Lenkachse für ein gewünschtes Vorspurverhalten des Fahrzeugs beeinflusst werden. Des Weiteren kann die Radaufhängung somit sehr platzsparend ausgebildet werden, da sowohl der Integrallenker als auch das Lenkmittel hinter der Radmitte angeordnet werden können. Hierdurch kann insbesondere bei einer angetriebenen Radaufhängungsvariante genügend Bauraum für die Antriebskomponenten geschaffen werden. Des Weiteren kann somit, insbesondere bei einer mit einer Lenkstange aktiv angelenkten Ausführungsform, der die Lenkstange verschiebende Aktuator, vorzugsweise Stellmotor, problemlos am Hilfsrahmen oder Aufbau angebracht werden.

Zur Radführung ist es vorteilhaft, wenn die Radaufhängung einen radführenden Querlenker aufweist, der vorzugsweise zur Aufnahme von Querkräften ausgebildet ist. Alternativ kann die Radaufhängung aber auch eine radführende Querblattfeder mit Zweipunktlagerung aufweisen, die im Bereich ihrer Enden mit dem jeweils zugeordneten Radträger gelenkig verbunden ist. Zum Ein- und Ausfedern der Radträger bzw. der dafür vorgesehenen Räder ist die Querblattfeder im Bereich zwischen ihren beiden Enden von diesen beabstandet gelagert. Vorzugsweise ist die Querblattfeder in diesem Bereich unmittelbar mit dem Aufbau gelenkig verbindbar oder alternativ dazu in einem Hilfsrahmen gelagert, der an den Aufbau montierbar ist. Des Weiteren ist die Querblattfeder im Bereich ihrer beiden Enden mit dem jeweils zugeordneten Radträger verbunden. Hierbei kann die Querblattfeder unmittelbar oder aber auch alternativ dazu mittelbar mit den Radträgern gekoppelt sein. Bei einer mittelbaren Verbindung kann die Querblattfeder beispielsweise mit einem Lenker verbunden sein, der wiederum an dem jeweiligen Radträger gelenkig befestigt ist.

Vorteilhaft ist es, wenn der radführende Lenker in Fahrzeughochrichtung in einer unteren Lenkerebene und die Querblattfeder bzw. alternativ dazu der Querlenker in einer darüber liegenden, oberen Lenkerebene angeordnet ist. Hierdurch kann die Radaufhängung sehr kompakt ausgebildet werden. Ferner ist insbesondere im Falle der Querblattfeder-Variante die Querblattfeder bei einer derartigen Anordnung sehr gut vor mechanischen und thermischen Einflüssen geschützt. So hat bspw. die für gewöhnlich im Bereich der unteren Lenkerebene angeordnete Abgasanlage keinen Einfluss auf die von dieser beabstandet angeordneten Querblattfeder. Infolgedessen können für die Querblattfeder auch temperaturempfindlichere Materialien, insbesondere faserverstärkte Kunststoffe, verwendet werden, mittels derer das Gewicht der Radaufhängung stark reduziert werden kann.

Des Weiteren kann durch die obenliegende Querblattfeder die Hub- und/oder Wankspreizung stark vergrößert werden. Aufgrund des vergrößerten Federweges der Querblattfeder eröffnen sich weitaus bessere Abstimmungsmöglichkeiten der Radaufhängung. Auch kann die Radaufhängung mittels einer derartig obenliegenden Querblattführung sehr platzsparend, einfach und leicht ausgebildet werden. Insbesondere aufgrund dieser sehr platzsparenden Ausgestaltung kann vorteilhafterweise auch problemlos eine angetriebene Achse realisiert werden.

Vorteilhaft ist es, wenn die Querblattfeder radführend ausgebildet ist. So kann die Querblattfeder derart mit dem jeweiligen Radträger verbunden sein, dass mittels derer insbesondere in Fahrzeugquerrichtung und/oder -längsrichtung auftretende Kräfte aufgenommen bzw. abgestützt werden können. Die Querblattfeder ist durch ihre Anordnung sowie oberen Lage im Wesentlichen als oberer Querlenker ausgebildet bzw. übernimmt im Wesentlichen dessen Funktion. Vorteilhafterweise können somit zusätzliche Lenker eingespart werden, wodurch die Radaufhängung einfach und kostengünstig zu realisieren ist.

In einer vorteilhaften Weiterbildung der Erfindung ist die Radaufhängung eine Doppelquerlenker-Radaufhängung, wobei vorzugsweise der obere Querlenker durch die Querblattfeder ausgebildet ist. Hierdurch kann eine sehr leichte, günstig zu fertigende sowie zu montierende Aufhängung realisiert werden.

Um zusätzliche Lenker einsparen zu können, ist es vorteilhaft, wenn die Querblattfeder im Bereich ihrer beiden Enden gelenkig und/oder unmittelbar mit dem jeweiligen Radträger verbunden ist. Hierdurch übernimmt die Querblattfeder nicht nur die Federung der Radaufhängung, sondern zusätzlich auch zumindest teilweise die Radführung. Infolgedessen wird der konstruktive Aufwand der Radaufhängung stark reduziert. Diesbezüglich ist es ebenso vorteilhaft, wenn die gelenkige Verbindung mittels eines Drehgelenks erfolgt, dessen Drehachse vorzugsweise im Wesentlichen in Fahrzeuglängsrichtung ausgerichtet ist. Hierdurch kann eine Radführung mittels der Querblattfeder insbesondere in Fahrzeughochrichtung realisiert werden.

Für die Führungseigenschaften der Querblattfeder ist es vorteilhaft, wenn diese, insbesondere verwindungssteife, Querblattfeder in Fahrzeuglängsrichtung steif und in Fahrzeughochrichtung nachgiebig ausgebildet ist. So kann mittels der Querblattfeder in Fahrzeughochrichtung sowohl eine Federung als auch eine Führung der beiden Radträger erfolgen. Infolgedessen sind keine zusätzlichen Bauteile, insbesondere Lenker, für diese Aufgabe erforderlich.

Auch ist es vorteilhaft, wenn die Querblattfeder unmittelbar mit dem Aufbau oder mittelbar mittels des Hilfsrahmens über ein erstes und ein zweites Lager verbunden bzw. verbindbar ist. Hierdurch kann sowohl eine Hubfederung als auch eine Wankfederung realisiert werden. Vorteilhafterweise kann mittels der Querblattfeder somit ein zusätzlicher Stabilisator entfallen, wodurch die Kosten und der konstruktive Aufwand der Radaufhängung reduziert werden können. Um eine derartige Hub- sowie Wankfederung gewährleisten zu können, ist es vorteilhaft, wenn das erste und zweite Lager insbesondere jeweils eine zur Fahrzeuglängsrichtung parallele Drehachse aufweisen. Ferner ist es vorteilhaft, wenn die beiden Lager vorzugsweise als Elastomerlager, insbesondere als Gummilager ausgebildet, zueinander beabstandet und/oder zur Fahrzeuglängsachse symmetrisch angeordnet sind.

Vorteilhaft ist es, wenn der Querlenker oder die Querblattfeder und/oder der Querlenkerbereich des radführenden Lenkers hinter der Radmitte und/oder im Wesentlichen in Fahrzeughochrichtung übereinanderliegend angeordnet sind. So kann auch in diesem Fall die Radaufhängung sehr bauraumsparend ausgebildet werden, wodurch ein Anrieb für die Räder problemlos in Form einer vorkonfigurierten Antriebseinheit integriert werden kann.

Zum Lenken des Radträgers um die Lenkachse ist es vorteilhaft, wenn das Lenkmittel zur passiven Lenkung über den Radhub als Spurlenker ausgebildet ist. Hierdurch kann die Radaufhängung sehr kostengünstig ausgebildet werden. Alternativ kann das Lenkmittel aber auch zur aktiven Lenkung über einen Stellmotor bzw. Aktuator als Spurstange ausgebildet sein. In diesem Fall ist die Spurstange als eine in seiner Länge veränderliche Spurstange ausgebildet. Diese kann beispielsweise über ein die Fahrdynamik erfassendes bzw. regelndes Steuergerät je nach gewünschtem Fahrerlebnis bzw. auf die Fahrsituation angepasst in der Länge verändert werden (Verkürzen oder Verlängern), um abgestützt an der Karossiere in den Radträger eine Lenkbewegung einzuleiten.

Die Radaufhängung kann sehr kompakt ausgebildet werden, wenn das Lenkmittel, insbesondere unmittelbar, mit dem Radträger verbunden ist. So kann durch ein unmittelbares Angreifen des Lenkmittels am Radträger eine sehr präzise Lenkung des Radträgers bzw. des damit drehbar verbundenen Rades um die Lenkachse erfolgen.

Um genügend Bauvolumen zum Antreiben der Räder bereitstellen zu können, ist es vorteilhaft, wenn das Lenkmittel hinter der Radmitte angeordnet ist.

Vorteilhaft ist es, wenn die Radaufhängung einen, insbesondere zweiteilig ausgebildeten, Montageträger mit einer ersten Halterung zur Lagerung der Querblattfeder oder des Querträgers, mit einer zweiten Halterung zur gelenkigen Aufnahme des radführenden Lenkers, insbesondere in dessen Querlenkerbereich, und/oder mit einer dritte Halterung zur Aufnahme des Lenkmittels aufweist. Mittels der zweiteiligen Ausbildung des Montageträgers kann eine sehr schnelle und einfache Montage der Querblattfeder erfolgen. Vorteilhafterweise ist die Querblattfeder zwischen den beiden Teilen des Montageträgers im Bereich des ersten und zweiten Lagers verklemmt. Des Weiteren kann der Montageaufwand der Radaufhängung durch einen derartigen Montageträger reduziert werden, da dieser modular sehr schnell und einfach an den Aufbau oder Hilfsrahmen des Kraftfahrzeuges montiert werden kann.

Vorteilhafterweise ist der Radträger mit einer Antriebseinheit verbindbar, insbesondere mit einem Radnabenmotor, Elektromotor und/oder Verbrennungsmotor antreibbar ausgebildet und/oder mit einer derartigen Antriebseinheit verbindbar. Mittels der Querblattfeder können zusätzliche Lenker eingespart werden, so dass für eine derartige antreibbare Lösung genügend Bauraum geschaffen werden kann. Der Bauraum kann ferner durch das hinter der Radmitte angeordnete Lenkmittel und den ebenfalls dort angeordneten Integrallenker vergrößert werden. Zusätzlich können Teile der Antriebseinheit oder aber auch diese vollständig an dem Montageträger befestigt sein. Hierdurch kann der Montageaufwand der als Modul ausgebildeten Radaufhängung zusammen mit der Antriebseinheit stark reduziert werden.

Nachfolgend ist die Erfindung anhand von Zeichnungen näher erläutert. Es zeigen:
Figuren 1 - 3 ein erstes Ausführungsbeispiel einer Radaufhängung mit einem radführenden Lenker und einer Querblattfeder und
Figur 4 ein zweites Ausführungsbeispiel einer Radaufhängung mit einem die Querblattfeder ersetzenden Querlenker.

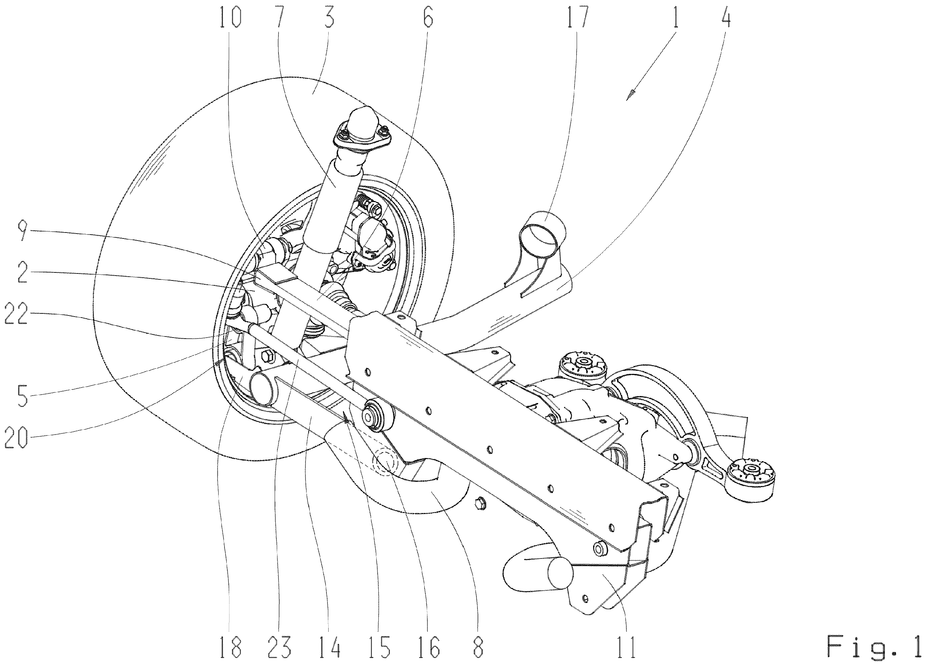

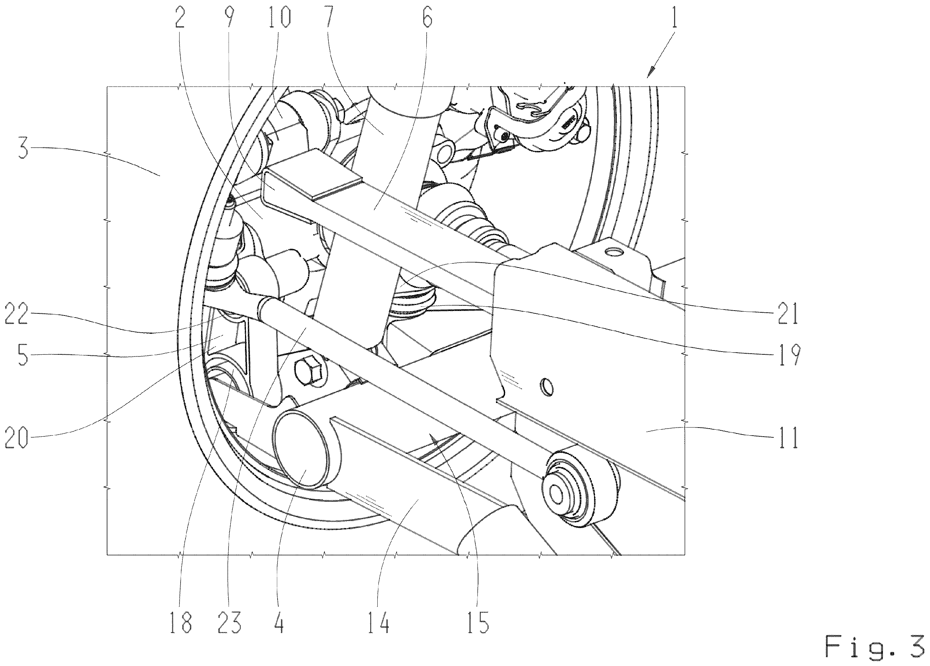

Die Figuren 1 - 3 und die Figur 4 zeigen stark vereinfacht, in unterschiedlicher perspektivischer Ansicht zwei alternative Ausführungsformen einer Radaufhängung 1. Die Darstellungen sind auf die wesentlichen Bauteile reduziert, um insbesondere die Verbindungsbereiche der Bauteile besser einsehen zu können. Einige der Figuren zeigen ferner nur eine Halbdarstellung eines Achsbereiches, wobei die Radaufhängung des dem dargestellten Rad gegenüberliegenden Rades identisch ausgebildet ist.

Das in den Figuren 1 - 3 dargestellte erste Ausführungsbeispiel der Radaufhängung 1 weist zwei in Fahrzeugquerrichtung gegenüberliegend angeordnete Radträger 2 auf, wobei lediglich einer dieser beiden Radträger 2 dargestellt ist. Der Radträger 2 nimmt ein Rad 3 drehbar gelagert auf. Das Rad 3 bzw. der Radträger 2 ist gegenüber einem hier nicht dargestellten Aufbau derart gelenkig gelagert, dass das Rad 3 gegenüber dem Aufbau ein- und ausfedern kann sowie um eine Lenkachse aktiv oder passiv gelenkt werden kann. Hierfür weist die Radaufhängung 1 einen radführenden Lenker 4, einen Integrallenker 5 und eine Querblattfeder 6 auf. Zum Dämpfen von Schwingungen greift ferner gemäß dem ersten Ausführungsbeispiel ein Dämpfer 7 am radführenden Lenker 4 an.

Der Lenker 4 ist, wie insbesondere in Figur 1 ersichtlich, in einer unteren Lenkerebene angeordnet. Die Querblattfeder 6 ist in einer darüber liegenden, oberen Lenkerebene positioniert. Die Querblattfeder 6 weist somit einen Abstand zu einer im Bereich der unteren Lenkerebene angeordneten Abgasanlage 8 auf. Vorteilhafterweise kann die Querblattfeder 6 somit auch aus einem temperaturempfindlichen Material, insbesondere aus einem faserverstärkten Kunstsoff ausgebildet sein. Hierdurch kann das Gewicht der Radaufhängung 1 stark reduziert werden. So besteht die Querblattfeder 6 vorzugsweise aus Kohle-, Glas- und/oder Aramidfasern, die in einer duroplastischen und/oder thermoplastischen Matrix eingebettet sind. Die Querblattfeder 6 ist in dem vorliegenden Ausführungsbeispiel radführend ausgebildet. Hierfür ist die Querblattfeder 6 verwindungssteif ausgebildet. Des Weiteren ist sie zur Aufnahme von Fahrzeuglängskräften in Fahrzeuglängsrichtung steif ausgebildet. Zur Federung der Radaufhängung 1 ist die Querblattfeder 6 in Fahrzeughochrichtung nachgiebig ausgebildet. Sie vereint somit die technische Wirkung einer herkömmlichen Spiralfeder bzw. Blattfeder und eines herkömmlichen oberen Querlenkers in einem Bauteil.

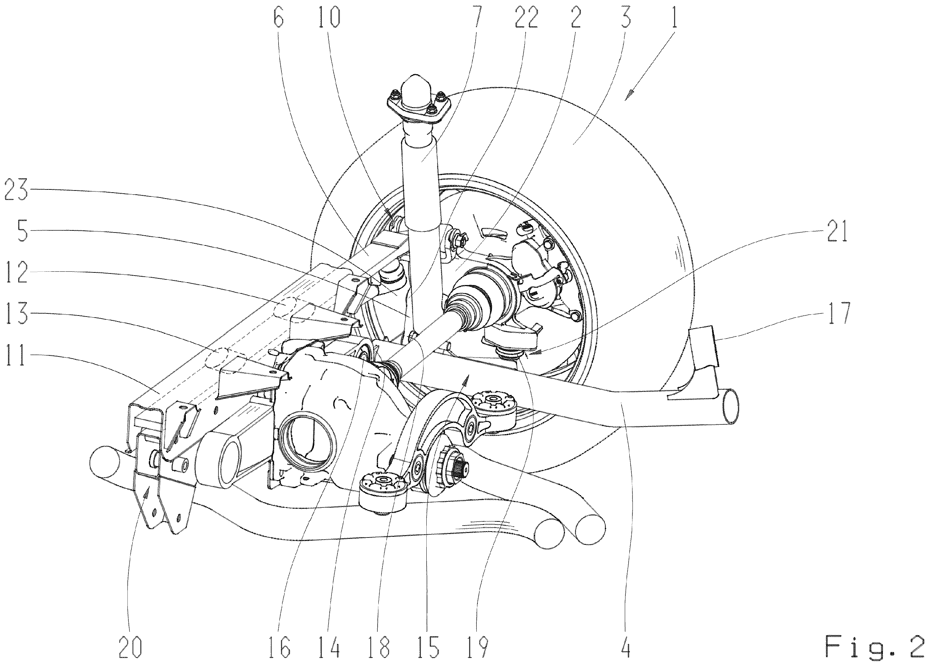

Die Radführung der Querblattfeder 6 erfolgt durch eine gelenkige Verbindung der Querblattfeder 6 im Bereich ihres Endes 9 mit dem jeweiligen Radträger 2, wobei die Querblattfeder etwa mittig über die Lager 12, 13 (s. Fig. 2) an der Karosserie abgestützt sind. Die gelenkige Verbindung zwischen Querblattfeder 6 und Radträger 2 ist im vorliegenden Ausführungsbeispiel durch ein Drehgelenk 10 ausgebildet. Die Drehachse des Drehgelenks 10 ist im Wesentlichen in Fahrzeuglängsrichtung ausgerichtet. Infolgedessen kann die radführende Querblattfeder 6 Längs- und/oder Querkräfte aufnehmen.

Die Querblattfeder 6 ist im Bereich zwischen ihren beiden Enden 6 - wobei in der Halbdarstellung lediglich eines dieser beiden Enden 6 dargestellt ist - von diesen beabstandet mit einem Montageträger 11 in Form einer Zweipunktlagerung verbunden. Die Zweipunktlagerung der Blattfeder 6 umfasst das erstes Lager 12 und das zweite Lager 13, wobei die jeweiligen Enden 6 zum Federn der Radaufhängung um die Federn schwenken können. Bei gleichmäßiger Einfederung der beiden Radträger 2 nimmt die Querblattfeder 6 somit annähernd eine U-Form ein. Die Querblattfeder 6 drückt hierbei den Aufbau des Fahrzeugs über beide Lager 12, 13 in die Ruhestellung zurück. Die Querblattfeder 6 übernimmt somit die Aufgabe einer Hubfederung. Im Falle einer Kurvenfahrt, bei der einer der beiden Radträger 2 bzw. Räder 3 stärker eingefedert wird, nimmt die Querblattfeder 6 in Fahrtrichtung gesehen annähernd eine S-Form ein. Auch in diesem Fall drückt die Querblattfeder 6 den Aufbau des Fahrzeugs über die beiden Lager 12, 13 in die Ruhestellung zurück. Die Querblattfeder 6 wirkt somit als Wankfederung und übernimmt somit die Aufgabe eines Stabilisators, der folglich bei der vorliegenden Radaufhängung 1 entfallen kann. Hierdurch kann die Radaufhängung 1 sehr leicht ausgebildet werden.

Neben der Querblattfeder 6 übernimmt auch der Lenker 4 die Aufgabe der Radführung. Der Lenker 4 ist im Wesentlichen ein Trapezlenker, mit Quer- und Längslenkeranteilen. So weist der Lenker 4 im Wesentlichen eine L-Form auf. Diese setzt sich aus einem Querlenkerbereich 14 und einem Längslenkerbereich 15 zusammen. Der Längslenkerbereich 15 erstreckt sich vom Querlenkerbereich 14 ausgehend im Wesentlichen in Fahrzeuglängsrichtung. Der Querlenkerbereich erstreckt sich im Vergleich dazu in Fahrzeugquerrichtung. Der Längslenkerbereich 15 erstreckt sich vom Querlenkerbereich 14 ausgehend, insbesondere von dessen Ende, im Wesentlichen in Fahrtrichtung. Der Querlenkerbereich 14 des Lenkers 4 ist in Fahrzeuglängsrichtung hinter der Radmitte ausgebildet. Gleiches trifft auf die Querblattfeder 6 zu, wobei die Querblattfeder 6 und der Querlenkerbereich 14 des Weiteren in Fahrzeughochrichtung vorzugsweise im Wesentlichen übereinanderliegend angeordnet sind.

Aufbauseitig ist der radführende Lenker 4 in einem ersten und einem zweiten Gelenk 16, 17 mit dem Aufbau und/oder einem Hilfsrahmen gelenkig verbunden. Das erste aufbauseitige Gelenk 16 ist im Bereich des dem Längslenkerbereich abgewandten Endes des Querlenkerbereiches 14 ausgebildet. Es koppelt den Lenker 4 im Bereich seines Querlenkerbereiches 14 mit dem Montageträger 11. Das zweite aufbauseitige Gelenk 17 ist im Gegensatz dazu im Bereich des dem Querlenkerbereich 14 abgewandten Endes des Längslenkerbereiches 15 am Lenker 4 ausgebildet. Mit dem zweiten Gelenk 17 ist der Lenker 4 mit dem hier nicht dargestellten Aufbau gekoppelt.

Zum Ein- und Ausfedern des Rades 3 ist der Lenker 4 des Weiteren in einem ersten und zweiten radseitigen Gelenk 18, 19 mit dem Radträger 2 gekoppelt. So weist der Radträger 2 mit dem Lenker 4 einen ersten und einen zweiten Verbindungsbereich 20, 21 auf. Um nicht nur ein Ein- und Ausfedern des Radträgers 2 gegenüber dem Aufbau gewährleisten zu können, sondern um den Radträger 2 bzw. das damit verbundene Rad 3 zusätzlich auch lenken zu können, ist der Radträger 2 im zweiten Verbindungsbereich 21 unmittelbar und im ersten Verbindungsbereich 20 mittelbar mit dem Lenker 4 gekoppelt. Beim Lenken des Rades 3 wird der Radträger 2 gegenüber dem Lenker 4 um eine Lenkachse geschwenkt. Die Verbindungslinie zwischen dem Drehgelenk 10 und dem zweiten radseitigen Gelenk 19 stellt hierbei die virtuelle Lenkachse des Radträgers 2 dar.

Die mittelbare Kopplung des Lenkers 4 mit dem Radträger 2 erfolgt im ersten Verbindungsbereich 20 mittels des Integrallenkers 5. Dieser ist im ungelenkten Zustand des Rades 3 im Wesentlichen vertikal ausgerichtet. Mit seinem dem Lenker 4 zugewandten unteren Ende ist der Integrallenker 5 mittels des ersten radseitigen Gelenkes 18 gelenkig mit dem Lenker 4 verbunden. Mit seinem dem Radträger 2 zugewandten oberen Ende ist der Integrallenker 5 ferner über ein Radträgergelenk 22 mit dem Radträger 2 gekoppelt. Das Radträgergelenk 22 und das erste radseitige Gelenk 18 ist jeweils als Drehgelenk ausgebildet. Die Drehachsen der beiden Drehgelenke sind zueinander parallel und im Wesentlichen in Fahrzeuglängsrichtung orientiert. Der Integrallenker 5 ist somit gegenüber dem Aufbau bzw. dem Montageträger 11 um das radseitige Gelenk 18 in Fahrzeugquerrichtung schwenkbar. Hierbei wird der Radträger 2 im Bereich des Radträgergelenkes 22 zum Aufbau hin- oder von diesem wegbewegt. In Zusammenwirkung mit dem zweiten Verbindungsbereich 21 erfolgt somit eine Lenkbewegung des Radträgers 2 um die Lenkachse der Radaufhängung 1.

Hierfür ist der zweite Verbindungsbereich 21 im Gegensatz zu dem hinter der Radmitte angeordneten ersten Verbindungsbereich 20 von diesem beabstandet vor der Radmitte ausgebildet. Ferner ist der Radträger 2 im zweiten Verbindungsbereich 21 mit dem Lenker 4, insbesondere in dessen Längslenkerbereich 15, unmittelbar mittels des zweiten radseitigen Gelenkes 19 verbunden. Das zweite radseitige Gelenk 19 ist im vorliegenden Ausführungsbeispiel als Kugelgelenk ausgebildet. Ohne den Integrallenker 5 könnte der Radträger 2 somit um die Radachse rotieren. Dieses Drehmoment wird jedoch mittels des Integrallenkers 5 abgefangen.

Die mittels des Integrallenkers 5 und des zweiten radseitigen Gelenkes 19 bzw. Kugelgelenks ausgebildete mittelbare bzw. unmittelbare Kopplung im ersten und zweiten Verbindungsbereich 20, 21 ermöglicht eine Schwenkbewegung des Radträgers 2 gegenüber dem radführenden Lenker 4 beim Ein- und Ausfedern des Rades 3. Des Weiteren ist das Rad 3 durch diese Kopplung lenkbar ausgebildet. Demnach kann der Radträger 2 durch ein Schwenken des Integrallenkers 5 um das erste radseitige Gelenk 18 gegenüber dem radführenden Lenker 4 um die im Wesentlichen in Fahrzeughochrichtung gerichtete Lenkachse der Radaufhängung 1 rotiert bzw. geschwenkt werden. Zum Steuern dieser Lenkbewegung weist die Radaufhängung 1 ein Lenkmittel 23 auf, das gemäß dem vorliegenden Ausführungsbeispiel am Radträger 2 gelenkig angreift. Alternativ könnte das Lenkmittel 23 in einem hier nicht dargestellten Ausführungsbeispiel aber auch unmittelbar am Integrallenker 5, insbesondere von dessen unteren Ende beabstandet, angreifen.

Im vorliegenden Ausführungsbeispiel ist das Lenkmittel 23 als Spurlenker ausgebildet. Dieser ist aufbauseitig mit dem Montageträger 11 und radseitig mit dem Radträger 2 in Fahrzeughochrichtung vom radführenden Lenker 4 beabstandet gelenkig verbunden. Das hinter der Radmitte liegende erste radseitige Gelenk 18 ist vorzugsweise nachgiebig, insbesondere als Gummilager, ausgebildet. Das vor der Radmitte liegende zweite radseitige Gelenk 19 ist im Gegensatz dazu vorzugsweise unnachgiebig ausgebildet. Hierdurch kann zusätzlich über die Ausnutzung der Elastokinematik die gewünschte Vorspur über den Radhub bewirkt werden. Die Einstellung dieses Eigenlenkverhaltens kann über das Lenkmittel 23 bzw. über den Spurlenker erfolgen. Alternativ könnte das Lenkmittel 23 aber auch in einem hier nicht dargestellten Ausführungsbeispiel als Spurstange ausgebildet sein, die über einen Aktuator, insbesondere Stellmotor, in Fahrzeugquerrichtung ausgelenkt wird und somit eine Lenkbewegung des Radträgers 2 gegenüber dem Lenker 4 einleitet. Der Aktuator wäre bei einer derartigen Variante vorzugsweise am Montageträger 11 montiert.

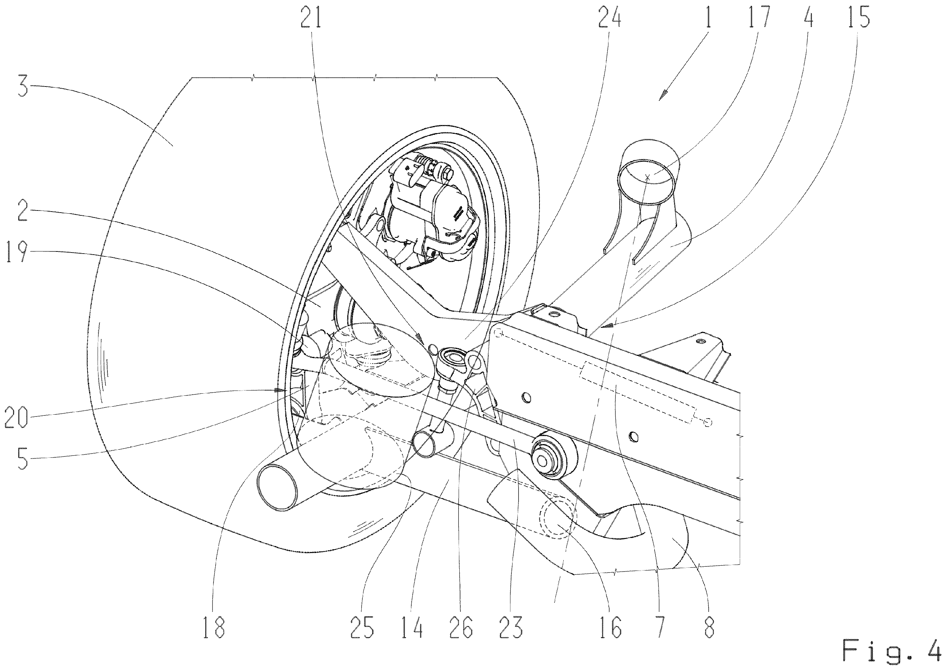

Figur 4 zeigt ein alternatives Ausführungsbeispiel der Radaufhängung 1. Hierin wurden für zum ersten Ausführungsbeispiel gleiche Merkmale gleiche Bezugszeichen verwendet. Sofern diese Merkmale nicht nochmals detailliert erörtert werden, entspricht deren Ausgestaltung und Wirkweise den vorstehend bereits beschriebenen Merkmalen.

Im Gegensatz zum ersten Ausführungsbeispiel weist das in Figur 4 dargestellte Ausführungsbeispiel einen in der oberen Lenkerebene angeordneten Querlenker 24 auf. Dieser ersetzt die Querblattfeder 6 des ersten Ausführungsbeispiels. Des Weiteren weist die Radaufhängung 1 gemäß Figur 4 eine Feder 25 auf, die am radführenden Lenker 4, insbesondere in dessen Querlenkerbereich 14 angreift. Des Weiteren ist der Dämpfer 7 von der Feder 25 beabstandet im Montageträger 11 angeordnet. Der Dämpfer 7 ist über eine Umlenkeinrichtung 26 mit dem Lenker 4 gekoppelt.

### Bezugszeichen

- 1: Radaufhängung
- 2: Radträger
- 3: Rad
- 4: Lenker
- 5: Integrallenker
- 6: Querblattfeder
- 7: Dämpfer
- 8: Abgasanlage
- 9: Ende
- 10: Drehgelenk
- 11: Montageträger
- 12: erstes Lager
- 13: zweites Lager
- 14: Querlenkerbereich
- 15: Längslenkerbereich
- 16: erstes aufbauseitiges Gelenk
- 17: zweites aufbauseitiges Gelenk
- 18: erstes radseitiges Gelenk
- 19: zweites radseitiges Gelenk
- 20: erster Verbindungsbereich
- 21: zweiter Verbindungsbereich
- 22: Radträgergelenk
- 23: Lenkmittel
- 24: Querlenker
- 25: Feder
- 26: Umlenkeinrichtung

## Patentansprüche

1. Radaufhängung für ein Kraftfahrzeug mit
einem Radträger (2), der ein Rad (3) drehbar gelagert aufnimmt,
einem radführenden Lenker (4) zum gelenkigen Verbinden des Radträgers (2) mit einem dafür vorgesehenen Aufbau und
einem Lenkmittel (23) zum Lenken des Rades (3),
wobei der Radträger (2) in einem ersten Verbindungsbereich (20) mittelbar über einen Integrallenker (5),
der mit dem Radträger (2) und dem Lenker (4) jeweils über ein Drehgelenk verbunden ist,
wobei die Drehachsen der beiden Drehgelenke (18, 22) des Integrallenkers (5) zueinander parallel und in Fahrzeuglängsrichtung ausgerichtet sind, und in einem zweiten Verbindungsbereich (21) unmittelbar mit dem Lenker (4) verbunden ist,
so dass der Radträger (2) und der radführende Lenker (4) zum Lenken des Rades (3) derart gelenkig miteinander verbunden sind, dass der Radträger (2) gegenüber dem radführenden Lenker (4) um eine Lenkachse schwenkbar ist,
wobei der Integrallenker (5) in Fahrzeuglängsrichtung in Bezug zur Fahrtrichtung hinter der Radmitte und
in Fahrzeugquerrichtung vollständig im Inneren des Rades (3) angeordnet ist, **dadurch gekennzeichnet, dass** der Lenker (4) L-förmig ausgebildet ist und einen sich im Wesentlichen in Fahrzeugquerrichtung erstreckenden Querlenkerbereich (14) und einen sich im Wesentlichen in Fahrzeuglängsrichtung erstreckenden Längslenkerberelch (15) aufweist, wobei der Querlenkerbereich (14) den kurzen und der Längslenkerbereich (15) den langen Schenkel des L-förmigen Lenkers (4) bildet.

2. Radaufhängung nach dem vorherigen Anspruch, **dadurch gekennzeichnet, dass** der Radträger (2) mit dem Lenker (4) in dem zweiten Verbindungsbereich (21) über ein Kugelgelenk verbunden ist.

3. Radaufhängung nach einem oder mehreren der vorherigen Ansprüche, **dadurch gekennzeichnet, dass** die beiden Verbindungsbereiche (20; 21) voneinander, insbesondere in Fahrzeuglängsrichtung, beabstandet sind.

4. Radaufhängung nach einem oder mehreren der vorherigen Ansprüche, **dadurch gekennzeichnet, dass** der erste Verbindungsbereich (20), hinter der Radmitte und der andere vor der Radmitte ausgebildet ist.

5. Radaufhängung nach einem oder mehreren der vorherigen Ansprüche, **dadurch gekennzeichnet, dass** der Integrallenker (5) im ungelenkten Zustand des Rades (3) im Wesentlichen in Fahrzeughochrichtung ausgerichtet ist.

6. Radaufhängung nach einem oder mehreren der vorherigen Ansprüche, **dadurch gekennzeichnet, dass** der Querlenkerbereich (14) des Lenkers (4) in Fahrzeuglängsrichtung hinter der Radmitte liegt.

7. Radaufhängung nach einem oder mehreren der vorherigen Ansprüche, **dadurch gekennzeichnet, dass** der erste Verbindungsbereich (20) im Bereich des radträgerseitigen Endes des Querlenkerbereiches (14) und/oder der zweite Verbindungsbereich (21) im Bereich des Längslenkerbereiches (15) ausgebildet ist.

8. Radaufhängung nach einem oder mehreren der vorherigen Ansprüche, **dadurch gekennzeichnet, dass** die Radaufhängung (1) einen radführenden Querlenker (24) oder eine radführende Querblattfeder (6) mit Zweipunktlagerung (12, 13) aufweist, die im Bereich ihrer Enden mit dem jeweils zugeordneten Radträger (2) gelenkig verbunden ist.

9. Radaufhängung nach einem oder mehreren der vorherigen Ansprüche, **dadurch gekennzeichnet, dass** der radführende Lenker (4) in Fahrzeughochrichtung in einer unteren Lenkerebene und der Querlenker (24) oder die Querblattfeder (6) in einer dazu oberen Lenkerebene angeordnet sind.

10. Radaufhängung nach einem oder mehreren der vorherigen Ansprüche, **dadurch gekennzeichnet, dass** der Querlenker (24) oder die Querblattfeder (6) und der Querlenkerftereich (14) des radführenden Lenkers (4) hinter der Radmitte und/oder im Wesentlichen in Fahrzeughochrichtung übereinanderliegend angeordnet sind.

11. Radaufhängung nach einem oder mehreren der vorherigen Ansprüche, **dadurch gekennzeichnet, dass** das Lenkmittel (23) zur passiven Lenkung über den Radhub als Spurlenker oder zur aktiven Lenkung über einen Stellmotor als Spurstange ausgebildet ist.

12. Radaufhängung nach einem oder mehreren der vorherigen Ansprüche, **dadurch gekennzeichnet, dass** das Lenkmittel (23), insbesondere unmittelbar, mit dem Radträger (2) gelenkig verbunden ist und/oder hinter der Radmitte angeordnet Ist.

## Claims

1. Wheel suspension system for a motor vehicle having a wheel support (2) which receives a wheel (3) in a rotatably mounted manner,
a wheel control link (4) for the articulated connection of the wheel support (2) to a structure which is provided for this purpose, and
a steering means (23) for steering the wheel (3),
the wheel support (2) being connected in a first connecting region (20) indirectly to the link (4) via an integral link (5)
which is connected to the wheel support (2) and the link (4) in each case via a pivot joint,
the rotational axes of the two pivot joints (18, 22) of the integral link (5) being oriented parallel to one another and in the vehicle longitudinal direction, and the said wheel support (2) being connected in a second connecting region (21) directly to the link (4),
with the result that the wheel support (2) and the wheel control link (4) are connected to one another in order to steer the wheel (3), in such a way that the wheel support (2) can be pivoted about a steering axis with respect to the wheel control link (4),
the integral link (5) being arranged in the vehicle longitudinal direction behind the wheel centre in relation to the driving direction, and
completely in the interior of the wheel (3) in the vehicle transverse direction,
**characterized in that** the link (4) is of L-shaped configuration, and has a transverse link region (14) which extends substantially in the vehicle transverse direction and a longitudinal link region (15) which extends substantially in the vehicle longitudinal direction, the transverse link region (14) forming the short limb and the longitudinal link region (15) forming the long limb of the L-shaped link (4).

2. Wheel suspension system according to the preceding claim, **characterized in that** the wheel support (2) is connected to the link (4) in the second connecting region (21) via a ball joint.

3. Wheel suspension system according to one or both of the preceding claims, **characterized in that** the two connecting regions (20; 21) are spaced apart from one another, in particular in the vehicle longitudinal direction.

4. Wheel suspension system according to one or more of the preceding claims, **characterized in that** the first connecting region (20) is configured behind the wheel centre and the other is configured in front of the wheel centre.

5. Wheel suspension system according to one or more of the preceding claims, **characterized in that** the integral link (5) is oriented substantially in the vehicle vertical direction in the non-steered state of the wheel (3).

6. Wheel suspension system according to one or more of the preceding claims, **characterized in that** the transverse link region (14) of the link (4) lies behind the wheel centre in the vehicle longitudinal direction.

7. Wheel suspension system according to one or more of the preceding claims, **characterized in that** the first connecting region (20) is configured in the region of the wheel support-side end of the transverse link region (14) and/or the second connecting region (21) is configured in the region of the longitudinal link region (15).

8. Wheel suspension system according to one or more of the preceding claims, **characterized in that** the wheel suspension system (1) has a wheel-controlling transverse link (24) or a wheel-controlling transverse leaf spring (6) with two-point mounting (12, 13), which transverse leaf spring (6) is connected in an articulated manner in the region of its ends to the respectively associated wheel support (2).

9. Wheel suspension system according to one or more of the preceding claims, **characterized in that** the wheel control link (4) is arranged in a lower link plane in the vehicle vertical direction, and the transverse link (24) or the transverse leaf spring (6) is arranged in an upper link plane with respect to the said lower link plane.

10. Wheel suspension system according to one or more of the preceding claims, **characterized in that** the transverse link (24) or the transverse leaf spring (6) and the transverse link region (14) of the wheel control link (4) are arranged behind the wheel centre and/or so as to lie above one another substantially in the vehicle vertical direction.

11. Wheel suspension system according to one or more of the preceding claims, **characterized in that** the steering means (23) is configured as a toe link for passive steering via the wheel travel or as a track rod for active steering via an actuating motor.

12. Wheel suspension system according to one or more of the preceding claims, **characterized in that** the steering means (23) is connected, in particular directly, to the wheel support (2) in an articulated manner and/or is arranged behind the wheel centre.

## Revendications

1. Suspension pour un véhicule automobile, comprenant un support de roue (2) qui reçoit une roue (3) de manière montée à rotation,
un bras de suspension (4), guidant la roue, servant à relier de manière articulée le support de roue (2) à une structure prévue à cet effet et un moyen de direction (23) servant à diriger la roue (3),
le support de roue (2) étant, dans une première région de liaison (20), relié au bras de suspension (4) indirectement par le biais d'un bras de suspension d'un seul tenant (5),
lequel est relié au support de roue (2) et au bras de suspension (4) respectivement par le biais d'une articulation rotative,
les axes de rotation des deux articulations rotatives (18, 22) du bras de suspension d'un seul tenant (5) étant orientés parallèlement l'un à l'autre et dans la direction longitudinale du véhicule, et
le support de roue étant, dans une deuxième région de liaison (21), relié directement au bras de suspension (4),
de telle sorte que le support de roue (2) et le bras de suspension (4), guidant la roue, soient reliés de manière articulée l'un à l'autre pour guider la roue (3), de telle sorte que le support de roue (2) puisse pivoter autour d'un axe de direction par rapport au bras de suspension (4) guidant la roue,
le bras de suspension d'un seul tenant (5) étant disposé derrière le centre de roue par rapport à la direction de conduite dans la direction longitudinale du véhicule et
étant disposé entièrement à l'intérieur de la roue (3) dans la direction transversale du véhicule,
**caractérisée en ce que** le bras de suspension (4) est réalisé en forme de L et comprend une région de bras de suspension transversale (14) s'étendant sensiblement dans la direction transversale du véhicule et une région de bras de suspension longitudinale (15) s'étendant sensiblement dans la direction longitudinale du véhicule, la région de bras de suspension transversale (14) formant la branche courte et la région de bras de suspension longitudinale (15) formant la branche longue du bras de suspension (4) en forme de L.

2. Suspension selon la revendication précédente, **caractérisée en ce que** le support de roue (2) est relié au bras de suspension (4) dans la deuxième région de liaison (21) par le biais d'une articulation à rotule.

3. Suspension selon l'une ou plusieurs des revendications précédentes, **caractérisée en ce que** les deux régions de liaison (20 ; 21) sont espacées l'une de l'autre, en particulier dans la direction longitudinale du véhicule.

4. Suspension selon l'une ou plusieurs des revendications précédentes, **caractérisée en ce que** la première région de liaison (20) est réalisée derrière le centre de roue et l'autre est réalisée devant le centre de roue.

5. Suspension selon l'une ou plusieurs des revendications précédentes, **caractérisée en ce que** le bras de suspension d'un seul tenant (5) est orienté sensiblement dans la direction verticale du véhicule à l'état non dirigé de la roue (3).

6. Suspension selon l'une ou plusieurs des revendications précédentes, **caractérisée en ce que** la région de bras de suspension transversale (14) du bras de suspension (4) se situe derrière le centre de roue dans la direction longitudinale du véhicule.

7. Suspension selon l'une ou plusieurs des revendications précédentes, **caractérisée en ce que** la première région de liaison (20) est réalisée dans la zone de l'extrémité côté support de roue de la région de bras de suspension transversale (14) et/ou la deuxième région de liaison (21) est réalisée dans la zone de la région de bras de suspension longitudinale (15).

8. Suspension selon l'une ou plusieurs des revendications précédentes, **caractérisée en ce que** la suspension (1) comprend un bras transversal (24) guidant la roue ou un ressort à lame transversal (6), guidant la roue, à support en deux points (12, 13), lequel ressort à lame transversal est, dans la zone de ses extrémités, relié de manière articulée au support de roue (2) respectivement associé.

9. Suspension selon l'une ou plusieurs des revendications précédentes, **caractérisée en ce que** le bras de suspension (4) guidant la roue est situé, dans la direction verticale du véhicule, dans un plan de bras de suspension inférieur et le bras de suspension transversal (24) ou le ressort à lame transversal (6) est situé dans un plan de bras de suspension supérieur à celui-ci.

10. Suspension selon l'une ou plusieurs des revendications précédentes, **caractérisée en ce que** le bras de suspension transversal (24) ou le ressort à lame transversal (6) et la région de bras de suspension transversale (14) du bras de suspension (4) guidant la roue sont disposés derrière le centre de roue et/ou de manière superposée sensiblement dans la direction verticale du véhicule.

11. Suspension selon l'une plusieurs des revendications précédentes, **caractérisée en ce que** le moyen de direction (23) est réalisé sous forme de bras d'équilibrage pour la direction passive par le biais du débattement de roue ou est réalisé sous forme de barre d'accouplement pour la direction active par le biais d'un servomoteur.

12. Suspension selon l'une ou plusieurs des revendications précédentes, **caractérisée en ce que** le moyen de direction (23) est relié, en particulier directement, de manière articulée au support de roue (2) et/ou est disposé derrière le centre de roue.
